# EUROPÄISCHE PATENTSCHRIFT

(11) **EP 2 093 520 B1**
(45) Veröffentlichungstag und Bekanntmachung des Hinweises auf die Patenterteilung: **25.01.2017**
(21) Anmeldenummer: 09002191.6
(22) Anmeldetag: 17.02.2009
(51) Int. Cl.: F24J 2/07, F24J 2/46, F24J 2/48, C23C 14/00, C23C 28/04, C23C 28/00, F24J 2/14, G02B 5/00

(54) **Strahlungsselektive Absorberbeschichtung, Absorberrohr und Verfahren zu dessen Herstellung**
Radiation-selective absorber coating, absorber tube and method for its manufacture
Revêtement d'absorbeur à rayonnement sélectif, tube d'absorbeur et son procédé de fabrication

(30) Priorität: 20.02.2008 DE 102008010199
(43) Veröffentlichungstag der Anmeldung: 26.08.2009
(73) Patentinhaber: Schott AG, 55122 Mainz (DE)
(72) Erfinder: Hildebrandt, Christina, 79102 Freiburg (DE); Georg, Andreas, Dr., 79104 Freiburg (DE); Schulte-Fischedick, Jan, Dr., 95679 Waldershof (DE); Silmy, Kamel, Dr., 95666 Mitterteich (DE); Kuckelkorn, Thomas, Dr., 07743 Jena (DE); Graf, Wolfgang, 79427 Eschbach (DE)

(56) Entgegenhaltungen:
- EP-A2- 1 887 293
- DE-B3-102004 010 689
- US-A- 6 045 896
- US-A1- 2007 281 171

## Beschreibung

Die Erfindung betrifft eine strahlungsselektive Absorberbeschichtung gemäß dem Oberbegriff des Patentanspruchs 1. Die Erfindung bezieht sich auch auf ein Absorberrohr mit einer solchen strahlungsselektiven Beschichtung. Die Erfindung bezieht sich auch auf ein Verfahren zu dessen Herstellung und auf ein Verfahren zum Betreiben eines Parabol-Rinnen-Kollektors unter Verwendung solcher Absorberrohre.

Strahlungsselektive Beschichtungen werden auch bei Verglasungen verwendet, wie z.B. aus der US 2007/0281171 bekannt.

Übliche Absorberbeschichtungen bestehen aus einem auf einem Substrat, insbesondere einem Metallrohr, aufgebrachten, im Infrarot-Bereich reflektierenden Schicht, einer Cermet-Schicht, die über einen hohen Absorptionsgrad im Bereich des Solarspektrums verfügt, und einer auf der Cermet-Schicht aufgebrachten Deckschicht, die als Antireflexionsschicht bezeichnet wird und wegen des hohen Brechungsindex der Cermet-Schicht zur Verringerung der Oberflächenreflexion auf der Cermet-Schicht vorgesehen ist.

Grundsätzliches Bestreben ist es, eine möglichst hohe Energieausbeute zu erzielen. Da die Energieausbeute unter anderem von den Koeffizienten des Absorptionsgrads σ und des Emissionsgrads ε abhängt, werden immer ein hoher Absorptionsgrad (α>95%) und ein geringer Emissionsgrad (ε<10%) der Absorberbeschichtung angestrebt.

Ferner wird der Wirkungsgrad des Kollektors durch die Temperatur bestimmt, bei der er betrieben wird. Unter diesem Gesichtspunkt ist eine möglichst hohe Temperatur erwünscht. Konträr hierzu nimmt die Haltbarkeit des Schichtsystems der Absorberbeschichtung aber mit steigender Betriebstemperatur aufgrund von Alterungs- und/oder Diffusionsprozessen ab, wodurch beispielsweise die Absorptionseigenschaft der Cermet-Schicht und die Reflexionseigenschaft der im Infrarot-Bereich reflektierenden Schicht stark nachlassen können.

Die DE 101 50 738 C1 beschreibt deshalb eine strahlungsselektive Absorberbeschichtung, die keine relevante Farbveränderung und somit keine Alterung zeigen soll. Dies wird dadurch erreicht, dass beim Auftragen einer dritten aus Aluminium und Aluminiumoxid bestehenden Schicht ein bestimmter Sauerstoffvolumenstrom eingestellt wird. Auf diese Schicht wird eine Abschlussschicht aus Al₂O₃ aufgebracht.

Aus der US 5,523,132 ist eine Absorberbeschichtung bekannt, in der mehrere Cermet-Schichten vorgesehen sind, die sich im Metallanteil und somit im Brechungsindex unterscheiden. Indem mehrere Absorptionsmaxima bei verschiedenen Wellenlängen geschaffen werden, soll eine bessere Anpassung an das solare Spektrum erreicht werden. Antidiffusionsschichten können zwischen der Cermet-Schicht und der im IR-Bereich reflektierenden Schicht bzw. zwischen der Cermet-Schicht und der Antireflexionsschicht vorgesehen sein, wobei keine Angaben über Material und Schichtdicke gemacht werden.

Aus der DE 10 2004 010 689 B3 ist ein Absorber mit einer strahlungsselektiven Absorberbeschichtung bekannt, die ein Metallsubstrat, eine Diffusionssperrschicht, eine metallische Reflexionsschicht, eine Cermet-Schicht und eine Antireflexionsschicht aufweist. Die Diffusionssperrschicht ist eine Oxidschicht, die aus oxidierten Komponenten des Metallsubstrats besteht.

In Michael Lanxner und Zvi Elgat in SPIE Vol. 1272 Optical Materials Technology for Energy Efficiency and Solar Energy Conversion IX (1990), Seite 240 bis 249 mit dem Titel "Solar selective absorber coating for high service temperatures, produced by plasma sputtering" wird eine auf einem Stahlsubstrat aufgebrachte Absorberbeschichtung mit einer Anti-Reflexionsschicht aus SiO₂, einer Cermet-Schicht aus einer Mo/Al₂O₃-Zusammensetzung und einer im Infrarot-Bereich reflektierenden Schicht aus Molybdän beschrieben, wobei zwischen der im Infrarot-Bereich reflektierenden Schicht und dem Substrat eine Diffusionsbarriere aus Al₂O₃ angeordnet ist.

Für die im Infrarot-Bereich reflektierenden Schichten wird üblicherweise Molybdän verwendet. Allerdings sind die Reflexionseigenschaften einer Molybdän-Schicht nicht optimal, so dass es wünschenswert ist, besser reflektierende Materialien einzusetzen.

Die Betriebstemperatur bekannter Absorberrohre liegt im Vakuum bei 300-400°C. Es wird aus den vorstehenden Gründen grundsätzlich angestrebt, die Betriebstemperatur weiter zu steigern, ohne aber beispielsweise die Absorptionseigenschaften der Cermet-Schicht und die Reflexionseigenschaften der im Infrarot-Bereich reflektierenden Schicht zu beeinträchtigen.

In C.E. Kennedy, "Review of Mid- to High-Temperature Solar Selective Absorber Materials", Technical Report des National Renewable Energy Laboratory, Ausgabe Juli 2002, sind solche Bestrebungen zusammengefasst. Daraus ist ein Schichtaufbau aus einer ZrOₓN_{y}- oder einer ZrCₓN_{y}-Absorptionsschicht und einer im IR-Bereich reflektierenden Schicht aus Ag oder Al bekannt, der durch Einbringung einer Al₂O₃-Diffusionssperrschicht eine verbesserte Temperaturstabilität an Luft aufweist. Ferner wurde festgestellt, dass die Temperaturstabilität der Infrarot-Reflexionsschicht im Vakuum durch Einbringung einer Diffusionssperrschicht unterhalb dieser Schicht verbessert werden kann. Für diese Barriereschicht werden Cr₂O₃, Al₂O₃ oder SiO₂ als Schichtmaterial vorgeschlagen. Hierdurch wird eine Stabilität der Silber-Reflexionsschicht bis 500°C erhofft.

Das Streben nach haltbareren Schichten bei gleichzeitig verbessertem Absorptions- und Emissionsgrad ist damit aber nicht beendet.

Aufgabe der Erfindung ist es in diesem Sinne, eine Absorberbeschichtung, Absorberrohre mit einer derartigen Beschichtung und Parabol-Rinnen-Kollektoren, in denen solche Absorberrohre eingesetzt werden, bereitzustellen, die dauerhaft wirtschaftlicher zu betreiben sind.

Diese Aufgabe wird dadurch gelöst, dass die im Infrarot-Bereich reflektierende Schicht auf wenigstens zwei Barriereschichten angeordnet ist, von denen die zweite Barriereschicht aus SiOₓ besteht.

Es hat sich überraschend gezeigt, dass die Abschirmung der im IR-Bereich reflektierenden Schicht gegenüber dem Substrat durch eine zweischichtige Barriere ein insbesondere thermisch bedingtes Eindiffundieren des Substratmaterials, insbesondere von Eisen aus dem Stahl-Absorberrohr, in die im IR-Bereich reflektierende Schicht wirksamer verhindert und damit die Langzeittemperaturstabilität der Beschichtung erhöht.

Dies gelingt insbesondere dann sehr gut, wenn eine erste Barriereschicht der wenigstens zwei Barriereschichten aus einem thermisch erzeugten Oxid und eine zweite Barriereschicht der wenigstens zwei Barriereschichten aus SiOₓ besteht, bei der x die Werte 1 bis 2 annehmen kann. Besonders bevorzugt ist x = 2, aber auch Werte zwischen 1 und 2 sind möglich.

Bevorzugt ist zwischen der im IR-Bereich reflektierenden Schicht und der vorteilhafter Weise aus Cermet bestehenden Absorptionschicht eine dritte Barriereschicht angeordnet, welche vorzugsweise aus einer AlₓO_{y}-Verbindung besteht, wobei x die Werte 1 bis 2 und y die Werte 1 bis 3 annehmen kann. Alternativ ist eine dritte Barriereschicht aus einer SiOₓ-Schicht bevorzugt, wobei x die Werte 1 bis 2 annehmen kann und vorzugsweise den Wert 2 annimmt, aber auch Werte zwischen 1 und 2 sind möglich.

Die Einbettung der im Infrarot-Bereich reflektierenden Schicht zwischen zwei Siliciumschichten oder einer Silicium- und einer Aluminiumoxidschicht und die damit verbundene Ausbildung eines Sandwiches hat den Vorteil, dass auch kein Material aus der im Infrarot-Bereich reflektierenden Schicht in die darüber liegende Absorptionsschicht eindiffundieren kann und auf diese Weise die Absorptionseigenschaften der Absorptionschicht beeinträchtigt. Die weitgehende Unterbindung von Diffusionen innerhalb des Schichtsystems, insbesondere in oder aus der im Infrarot-Bereich reflektierenden Schicht, sowie in die Cermet-Absorptions-Schicht kann somit sichergestellt werden.

Auf diese Weise konnte erstmals eine hohe Absorption mit α > 95,5% und ein geringer Emmisionsgrad mit ε < 8,5% bei einer Betriebstemperatur von 550°C im Vakuum über eine Dauer von 600 Stunden nachgewiesen werden. Hierdurch lässt sich der Wirkungsgrad eines Kollektors mit einem mit dieser Beschichtung versehenen Absorberrohrs gleich in doppelter Hinsicht verbessern: das verbesserte Selktivitätsverhältnis α/ε > 0,95/0,1 bedeutet eine höhere Ausbeute der Strahlungsenergie und eine erhöhte Betriebstemperatur ermöglicht eine effizientere Umwandlung in elektrische Energie, wobei erst die lange Lebensdauer einer derartigen Beschichtung das wirtschaftliche Betreiben eines entsprechenden Parabol-Rinnen-Kollektors mit derart beschichteten Absorberrohren sicherstellt.

Die hohe Temperaturbeständigkeit der Absorberschichtung erlaubt nämlich die Verwendung preiswerter Wärmeträgermedien. Bisher wurden teure Spezialöle als Wärmeträgerflüssigkeit eingesetzt, die nur bis ca. 400°C thermisch stabil sind. Die hohe Temperaturstabilität der Absorberbeschichtung erlaubt nunmehr Betriebstemperaturen für die Absorberrohre von 400°C bis zu 550°C.

Es kann vorteilhafterweise ein Wärmeträgermedium mit einem Siedepunkt < 110°C, insbesondere Wasser, eingesetzt werden. Bei derart hohen Betriebstemperaturen entsteht Wasserdampf, der unmittelbar in Dampfturbinen eingeleitet werden kann. Zusätzliche Wärmetauscher für die Übertragung der Wärme vom bisher verwendeten Öl auf Wasser sind nicht mehr erforderlich, so dass unter diesem Gesichtspunkt Parabol-Rinnen-Kollektoren mit Absorberrohren mit erfindungsgemäßen Absorberbeschichtung weitaus wirtschaftlicher betrieben werden können, als dies bisher der Fall war.

Ein weiterer Vorteil besteht darin, dass die Strömungsgeschwindigkeit der Wärmeträgerflüssigkeit durch die Absorberrohre abgesenkt werden kann, da eine höhere Betriebstemperatur ohne Nachteile für die Absorberrohrbeschichtung zulässig ist. Auf diese Weise kann Energie zum Betreiben der Pumpen eines Parabol-Rinnen-Kollektors eingespart werden.

Vorzugsweise liegt die Dicke der Silicium- bzw. Aluminiumoxidschichten zwischen 5 nm und 100 nm. Bei Dicken < 5 nm ist, je nach Zusammensetzung der angrenzenden Schichten, die Barrierewirkung der Silicium- bzw. Aluminiumoxidschicht nicht zufriedenstellend. Bei Dicken größer 100 nm treten thermische Spannungen auf, die unter Umständen zu einer Schichtablösung führen könnten. Bevorzugt liegt die Dicke der Silicium- bzw. Aluminiumoxidschichten zwischen 15 nm und 70 nm, besonders bevorzugt zwischen 20 nm und 40 nm.

Die Dicken der beiden Silicium- bzw. Aluminiumoxidschichten können unterschiedlich sein, wobei die Dicke der unteren Siliciumoxidschicht vorzugsweise größer ist als die Dicke der oberen Oxidschicht. Vorzugsweise liegt die Schichtdicke der Siliciumoxidschicht, die zwischen dem Substrat und der im IR-Bereich reflektierenden Schicht angeordnet ist, bei 5 nm bis 100 nm, vorzugsweise bei 15 nm bis 70 nm, und die Schichtdicke der Aluminium- oder Siliciumoxidschicht, die zwischen der im IR-Bereich reflektierenden Schicht und der Absorptionsschicht angeordnet ist, bei 0 nm bis 50 nm, je nach Zusammensetzung der Schichten vorzugsweise bei 30 nm bis 40 nm oder auch bei 5 nm bis 15 nm.

Die Einbettung der im Infrarot-Bereich reflektierenden Schicht zwischen zwei Oxidschichten hat den weiteren Vorteil, dass für diese Schicht Materialien wie Silber, Kupfer, Platin oder Gold eingesetzt werden können, die zwar leichter diffundieren, aber gegenüber Molybdän den entscheidenden Vorteil haben, dass sie im Infrarot-Bereich deutlich besser reflektieren, so dass ein Emissionsgrad ε < 10% erreichbar ist.

Die Dicke der im Infrarot-Bereich reflektierenden Schicht liegt materialabhängig bei 50 nm bis 250 nm. Innerhalb dieses Dickenbereiches ist eine Schichtdicke von 100 nm bis 150 nm bevorzugt, wenn insbesondere Kupfer oder Silber verwendet wird. Bei der Verwendung von Silber können auch Schichtdicken im Bereich von 80 nm bis 150 nm bevorzugt sein. In anderen Fällen kommen auch Schichtdicken von 50 bis 100 nm, insbesondere von 50 bis 80 nm in Betracht. Diese geringen Schichtdicken für die im Infrarot-Bereich reflektierende Schicht sind deshalb möglich, weil die Materialien Gold, Silber, Platin und Kupfer eine deutlich höhere Reflektivität aufweisen und durch die Packung zwischen zwei Oxidschichten nicht in andere Schichten wegdiffundieren können bzw. nicht durch die Eindiffusion störender anderer Elemente in ihren positiven Eigenschaften beeinträchtigt werden.

Der höhere Preis der Edelmetalle Gold, Silber und Platin kann durch die deutlich geringere Schichtdicke gegenüber den bekannten Schichtdicken für die im Infrarot-Bereich reflektierende Schicht kompensiert, teilweise sogar überkompensiert werden.

Die Verwendung von SiOₓ als zweite Barriereschicht zwischen Substrat und Infrarot-Spiegelbeschichtung ist gegenüber der Verwendung von AlₓO_{y} vorteilhaft, da dann nur eine Dicke von ca. 30 nm gegenüber ca. 60 nm notwendig ist. Dadurch können die Prozesszeiten verkürzt und der Durchsatz erhöht werden.

Die Dicke der Absorptionsschicht liegt vorzugsweise bei 60 bis 180 nm, besonders bevorzugt bei 80 nm bis 150 nm. Die Absorptionsschicht ist vorzugsweise eine Cermet-Schicht aus Aluminiumoxid mit Molybdän oder aus Zirkonoxid mit Molybdän. Anstelle von einer homogenen Absorptionsschicht können auch mehrere Absorptionsschichten unterschiedlicher Zusammensetzung, insbesondere mit abnehmendem Metallanteil, oder eine graduell veränderliche Absorptionsschicht vorgesehen sein. Vorzugsweise ist die Cermet-Schicht eine Gradientenschicht, worunter eine Schicht verstanden wird, bei der der Metallanteil innerhalb der Schicht kontinuierlich, in der Praxis auch stufenweise zu- bzw. abnimmt.

Die Schichtdicke der auf der Absorptions-Schicht befindlichen Antireflexionsschicht liegt vorzugsweise bei 60 bis 120 nm. Diese Schicht besteht vorzugsweise aus Siliziumoxid oder Aluminiumoxid.

Das erfindungsgemäße Verfahren zum Herstellen eines Absorberrohrs ist gekennzeichnet durch folgende Schritte:
- Aufbringen einer ersten Oxid-Barriereschicht auf ein Stahlrohr mittels thermischer Oxidation,
- Aufbringen einer zweiten Barriereschicht mittels physikalischer Gasphasenabscheidung (PVD) von Silicium unter Zuführung von Sauerstoff,
- Aufbringen einer im Infrarot-Bereich reflektierende Schicht mittels physikalischer Gasphasenabscheidung von Materialien wie Gold, Silber, Platin oder Kupfer, bevorzugt von Gold, Silber, Platin oder Kupfer
- Aufbringen eine Absorptionsschicht mittels gleichzeitiger physikalischer Gasphasenabscheidung von Aluminium und Molybdän, und
- Aufbringen einer Antireflexionsschicht mittels physikalischer Gasphasenabscheidung von Silicium unter Zuführung von Sauerstoff. Vorzugsweise wird das Stahlrohr vor der thermischen Oxidation poliert, und zwar bevorzugt auf eine Oberflächenrauheit von Rₐ < 0,2 µm

Das erfindungsgemäße Absorberrohr, insbesondere für Parabol-Rinnen-Kollektoren, mit einem Rohr aus Stahl, auf dessen Außenseite eine strahlungsselektive Absorberbeschichtung aufgebracht ist, die mindestens eine im Infrarot-Bereich reflektierende Schicht, mindestens eine über der reflektierenden Schicht angeordnete Absorptionschicht und eine über der Absorptionschicht angeordnete Antireflexionsschicht aufweist, ist dadurch gekennzeichnet, daß zwischen dem Stahlrohr und der reflektierenden Schicht wenigstens zwei Barriereschichten angeordnet sind, von denen eine auf dem Stahlrohr aufgebrachte erste Barriereschicht aus einem thermisch erzeugten Oxid und eine auf der ersten Barriereschicht aufgebrachte zweite Barriereschicht aus SiOₓ besteht, wobei x die Werte 1 bis 2 annehmen kann.

Das Absorberohr, insbesondere für Parabol-Rinnen-Kollektoren mit einem Rohr aus Stahl, auf dessen Außenseite eine strahlungsselektive Absorberbeschichtung mindestens mit einer im IR-Bereich reflektierenden Schicht, mit einer Absorptionsschicht, insbesondere aus Cermet-Material, und mit einer Antireflexionsschicht, die auf der Cermet-Schicht aufgebracht ist, ist insbesondere dadurch gekennzeichnet, dass die im Infrarot-Bereich reflektierende Schicht zwischen zwei SiOₓ-Schichten oder einer SiOₓ- und einer Al_{y}O_{z}-Schicht angeordnet ist, wobei x vorzugsweise den Wert 2, y vorzugsweise die Werte 1 bis 2 und z die Werte 1 bis 3 annehmen kann.

Das erfindungsgemäße Verfahren zum Betreiben eines Parabol-Rinnen-Kollektors mit Absorberrohren, durch die ein Wärmeträgermedium geleitet wird, ist dadurch gekennzeichnet,
dass die Absorberrohre mit einer strahlungsselektiven Absorberbeschichtung verwendet werden, die mindestens eine im Infrarot-Bereich reflektierende Schicht, mindestens eine über der reflektierenden Schicht angeordnete Absorptionschicht und eine über der Absorptionschicht angeordnete Antireflexionsschicht aufweist, wobei zwischen dem Absorberrohr und der reflektierenden Schicht wenigstens zwei Barriereschichten angeordnet sind, von denen eine dem Absorberrohr zugewandte erste Barriereschicht aus einem thermisch erzeugten Oxid und eine auf der ersten Barriereschicht aufgebrachte zweite Barriereschicht aus SiOₓ besteht, wobei x die Werte 1 bis 2 annehmen kann.

Das Verfahren zum Betreiben eines Parabol-Rinnen-Kollektors mit Absorberrohren, durch die ein Wärmeträgermedium geleitet wird, ist insbesondere dadurch gekennzeichnet, dass Absorberrohre mit einer strahlungsselektiven Absorberbeschichtung verwendet werden, die mindestens eine im Infrarot-Bereich reflektierende Schicht, eine Absorptionsschicht, insbesondere aus Cermet-Material, und eine Antireflexionsschicht aufweist, wobei die im Infrarot-Bereich reflektierende Schicht zwischen zwei SiOₓ-Schichten oder einer SiOₓ- und einer Al_{y}-O_{z}-Schicht angeordnet ist, wobei x vorzugsweise den Wert 2, y vorzugsweise die Werte 1 bis 2 und z die Werte 1 bis 3 annehmen kann.

Als Wärmeträgerflüssigkeit kann insbesondere Wasser, aber auch Öl oder flüssiges Salz eingesetzt werden.

Gemäß einer weiteren Ausführungsform sieht das Verfahren zum Betreiben eines Parabol-Rinnen-Kollektors vor, dass die Betriebstemperatur der Absorberrohre auf 400°C bis 550°C, insbesondere auf 480°C bis 520°C eingestellt wird.

Beispielhafte Ausführungsformen der Erfindung werden nachfolgend anhand der Zeichnungen näher erläutert.

Es zeigen:
- Figur 1: einen Parabol-Rinnen-Kollektor
- Figur 2: einen Schnitt durch ein Absorberrohr gemäß einer Ausführungsform der Erfindung.

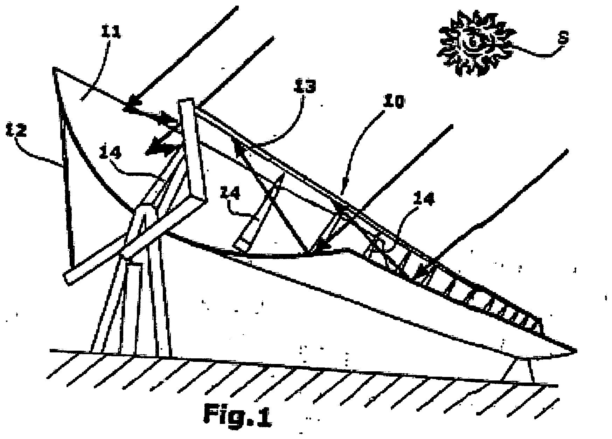

In der Figur 1 ist ein Parabol-Rinnen-Kollektor 10 dargestellt, der einen langgesstreckten Parabolreflektor 11 mit einem parabelförmigen Profil aufweist. Der Parabolreflektor 11 wird von einer Tragstruktur 12 gehalten. Längs der Brennlinie des Parabolreflektors 11 erstreckt sich ein Absorberrohr 13, das an Stützen 14 befestigt ist, welches mit dem Parabol-Rinnen-Kollektor verbunden sind. Der Parabolreflektor 11 bildet mit den Stützen 14 und dem Absorberrohr 13 eine Einheit, die um die Achse des Absorberohres 13 geschwenkt und dadurch dem Stand der Sonne S einachsig nachgeführt wird. Die von der Sonne S einfallende parallele Solarstrahlung wird von dem Parabolreflektor 11 auf das Absorberrohr 13 fokussiert. Das Absorberrohr 13 wird von einem Wärmeträgermedium, insbesondere Wasser durchflossen, und durch die absorbierte Solarstrahlung erhitzt. Am Austrittsende des Absorberohres kann das Wärmeübertragungsmedium entnommen und einem Energieverbraucher oder -umwandler zugeführt werden.

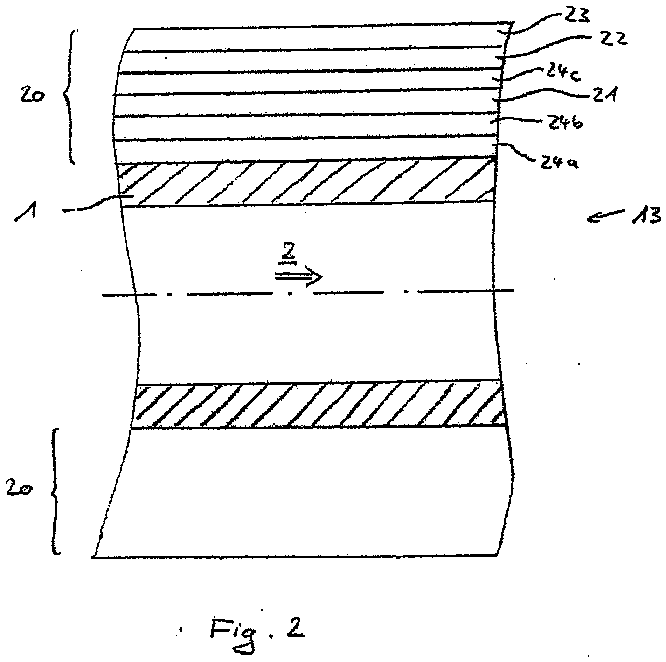

In der Figur 2 ist schematisch ein Schnitt durch ein Absorberrohr 13 dargestellt. Das Absorberrohr 13 weist ein von dem Wärmeträgermedium 2 durchströmtes Stahlrohr 1 auf, das das Substrat für die auf der Außenseite des Rohres 1 aufgebrachte Absorberbeschichtung 20 bildet. Die Schichtdicken der einzelnen Schichten der Absorberbeschichtung 20 sind zur einfachen Veranschaulichung vergrößert und gleich dick eingezeichnet.

Die Absorberbeschichtung 20 weist von innen nach außen eine auf dem Stahlrohr 1 mittels thermischer Oxidation aufgebrachte erste Barriere- oder Diffusionssperrschicht 24a aus Chromeisenoxid auf. Darauf ist zwischen einer zweiten Barriereschicht 24b aus SiOₓ, vorzugsweise aus SiO₂, und einer dritten Barriereschicht 24c, vorzugsweise aus Silicium- oder Aluminiumoxid, eine im Infrarot-Bereich reflektierende Schicht 21 aus Gold, Silber, Platin oder Kupfer eingebettet. Auf der dritten Barriereschicht 24c ist eine Cermet-Schicht 22 aufgebracht, und nach außen schließt das Schichtsystem mit einer Antireflexionsschicht 23 ab.

Das Absorberrohr gemäß der Ausführungsform in Figur 2 wird mit dem im Folgenden beschriebenen Verfahren beschichtet.

Das Stahlrohr 1, vorzugsweise ein Edelstahlrohr, wird poliert und anschließend gereinigt. Vorzugsweise wird beim Polieren eine Oberflächenrauheit Rₐ < 0,2 µm erzielt. Anschließend wird das Edelstahlrohr bei einer Temperatur > 400°C etwa eine halbe bis 2 Stunden, insbesondere bei 500°C etwa 1 Stunde thermisch oxidiert. Dabei entsteht eine Oxidschicht von 15 nm bis 50 nm, vorzugsweise von 30 nm ± 10 nm Dicke als erste Barriereschicht 24a.

Anschließend wird das Stahlrohr in eine Vakuumbeschichtungsanlage eingeführt und die Anlage evakuiert. Nach Erreichen eines Druckes von weniger als 5 x 10⁻⁴ mbar, vorzugsweise 1 x 10⁻⁴ mbar werden die nachfolgenden Schichten mittels physikalischer Gasphasenabscheidung (PVD), insbesondere mittels Kathodenzerstäubung (Sputtern) aufgebracht. Dazu wird das Stahlrohr drehend an Sputterquellen, d.h. an aus den Beschichtungssubstanzen, beispielsweise Al, Ag und Mo, bestehenden Targets vorbeigeführt.

Im ersten Abscheidungsschritt wird die zweite Barriereschicht 24b in Form einer SiOₓ-Schicht aufgebracht, indem Silicium verdampft bzw. zerstäubt und reaktiv unter Zuführung von Sauerstoff abgeschieden wird. Dabei wird ein Sauerstoffdruck zwischen 10⁻² mbar und 10⁻³ mbar, bevorzugt 4 bis 9 x 10⁻³ mbar eingestellt. Die bevorzugte Schichtdicke dieser zweiten Barriereschicht beträgt 10 nm bis 70 nm und besonders bevorzugt 30 nm ± 10 nm.

Im folgenden zweiten Abscheidungsschritt wird die im Infraroten reflektierende Schicht 21 aufgebracht, indem Gold-, Silber-, Platin- oder Kupfer, bevorzugt Silber mit einer Dicke von 60 nm bis 150 nm, besonders bevorzugt von 110 nm ±10 nm auf der zweiten Barriereschicht 24b abgeschieden wird.

Im dritten Abscheidungsschritt wird die dritte Barriereschicht 24c in Form einer weiteren SiOₓ- oder AlₓO_{y}-Schicht aufgebracht, indem Silicium oder Aluminium wie im Fall der zweiten Barriereschicht verdampft und reaktiv unter Zuführung von Sauerstoff abgeschieden wird. Die bevorzugte Schichtdicke dieser dritten Barriereschicht beträgt maximal 50 nm, besonders bevorzugt 10 nm ± 5 nm. Diese Barriereschicht kann aber auch völlig entfallen, da sich herausgestellt hat, dass bei geeigneter Zusammensetzung der auf der Reflexionsschicht 21 aufgebrachten Absorptionsschicht 22 eine Diffusion nicht durch eine zusätzliche Barriere gehemmt werden muss.

Im vierten Abscheidungsschritt wird durch gleichzeitige Verdampfung/Zerstäubung von Aluminium und Molybdän aus einem gemeinsamen Tiegel oder von zwei separaten Targets die Absorptions- oder genauer in diesem Fall die Cermetschicht 22 aufgebracht. Dabei wird vorzugsweise gleichzeitig Sauerstoff in den Verdampfungs-/Zerstäubungsbereich eingeleitet, um neben Aluminium und Molybdän (reaktiv) auch Aluminiumoxid abzuscheiden.

Dabei kann im vierten Abscheidungsschritt die Zusammensetzung durch entsprechende Wahl der Betriebsparameter (Verdampfungs-/Zerstäubungsrate und Sauerstoffmenge) unterschiedlich eingestellt und sogar im Verlauf der Schicht variiert werden. Insbesondere bei Verwendung separater Targets kann so die Abscheidung des Molybdänanteils relativ zur Abscheidung des Aluminium- und/oder Aluminiumoxidanteils in der Absorptionsschicht 22 variabel ausgeführt wird. Der Molybdänanteil der Absorptionsschicht 22 ist mit anderen Worten als Gradient ausgeführt, wobei er bevorzugt während des Aufbringens der Absorptionsschicht 22 gesenkt wird. Er beträgt innen vorzugsweise 25 Vol.-% bis 70 Vol.-%, besonders bevorzugt 30 Vol.-% bis 70 Vol.-%, ganz besonders bevorzugt 40 ± 15 Vol.-%, und nimmt nach außen auf 10 Vol.-% bis 30 Vol.-%, besonders bevorzugt 20 ± 10 Vol.-%, ab.

Die Zugabe von Sauerstoff in Relation zum abgeschiedenen Aluminiumanteil erfolgt vorzugsweise unterstöchiometrisch, so dass ein nicht oxidierter Aluminiumanteil in der Absorptionsschicht 22 verbleibt. Dieser steht dann als Redoxpotential oder Sauerstoffgetter zur Verfügung, sodass die Bildung von Molybdänoxid unterbleibt. Der nicht oxidierte Aluminiumanteil in der Absorptionsschicht 22 liegt bevorzugt unter 10 Vol.-%, besonders bevorzugt zwischen 0 und 5 Vol.-%, bezogen auf die Gesamtzusammensetzung der Absorptionsschicht. Der nicht oxidierte Aluminiumanteil kann ebenfalls innerhalb der Absorptionsschicht durch Veränderung der Betriebsparameter Verdampfungsrate und Sauerstoffmenge variiert werden.

Die Absorptionsschicht 22 wird insgesamt vorzugsweise mit einer Dicke von 60 nm bis 180 nm, besonders bevorzugt mit einer Dicke von 80 nm bis 150 nm, ganz besonders bevorzugt mit 120 ± 30 nm aufgebracht.

Im fünften Abscheidungsschritt wird die Antireflexionsschicht 23 in Form einer SiO2 aufgebracht, indem mittels physikalischer Gasphasenabscheidung von Silizium unter Zuführung von Sauerstoff abgeschieden wird. Die bevorzugte der so abgeschiedenen Antireflexionsschicht 23 beträgt 70 nm bis 110 nm, besonders bevorzugt 90 ± 10 nm.

Ein auf diese Weise erzeugtes Absorberrohr wurde in einer Vakuumheizvorrichtung für 600 h bei 550°C geheizt. Der Druck im Vakuumraum war während dieser Heizdauer kleiner als 1 x 10⁻⁴ mbar. Nach 600 h wurde die Heizung abgeschaltet. Nach Abkühlen der Probe auf unter 100°C wurde der Vakuumraum belüftet und die Probe entnommen. Die Probe wurde anschließend spektrometrisch vermessen, wobei ein integraler solarer Absorptionsgrad von 95,5% ± 0,5 % für ein Sonnenspektrum AM 1,5 direkt und den Wellenlängenbereich von 350-2500 nm bestimmt werden konnte. Der thermischer Emissionsgrad für eine Substrattemperatur von 400°C wurde mit 7,5% ± 2% ermittelt.

### Bezugszeichenliste

- 1: Stahlrohr
- 2: Wärmeträgerflüssigkeit
- 10: Parabol-Rinnen-Kollektor
- 11: Parabolreflektor
- 12: Tragstruktur
- 13: Absorberrohr
- 14: Stütze
- 20: strahlungsselektive Absorberbeschichtung
- 21: im Infrarot-Bereich reflektierende Schicht
- 22: Absorptions-Schicht
- 23: Antireflexionsschicht
- 24a: erste Barriereschicht
- 24b: zweite Barriereschicht
- 24c: dritte Barriereschicht

## Patentansprüche

1. Strahlungsselektive Absorberbeschichtung (20), insbesondere für Absorberrohre (13) von Parabol-Rinnen-Kollektoren (10), mit einer im Infrarot-Bereich reflektierenden Schicht (21), die Gold, Silber, Platin oder Kupfer aufweist und eine Schichtdicke von 50 nm bis 250 nm besitzt, mindestens einer über der reflektierenden Schicht (21) angeordneten Absorptionschicht (22) und mit einer über der Absorptionschicht (22) angeordneten Antireflexionsschicht (23), wobei die reflektierende Schicht (21) auf wenigstens zwei Barriereschichten (24a) und (24b) angeordnet ist, wobei die zweite Barriereschicht (24b) der wenigstens zwei Barriereschichten aus SiOₓ besteht.

2. Absorberbeschichtung (20) nach Anspruch 1,
**dadurch gekennzeichnet,**
**dass** die erste Barriereschicht (24a) der wenigstens zwei Barriereschichten aus einem thermisch erzeugten Oxid und die zweite Barriereschicht (24b) der wenigstens zwei Barriereschichten aus SiOₓ besteht, wobei x die Werte 1 bis 2 annehmen kann.

3. Absorberbeschichtung (20) nach Anspruch 1 oder 2,
**dadurch gekennzeichnet,**
**dass** zwischen der reflektierenden Schicht (21) und der Absorptionsschicht (22) eine dritte Barriereschicht (24c) angeordnet ist.

4. Absorberbeschichtung (20) nach Anspruch 3,
**dadurch gekennzeichnet,**
**dass** die dritte Barriereschicht (24c) aus einer AlₓO_{y}-Verbindung besteht, wobei x die Werte 1 bis 2 und y die Werte 1 bis 3 annehmen kann.

5. Absorberbeschichtung (20) nach Anspruch 3,
**dadurch gekennzeichnet,**
**dass** die dritte Barriereschicht (24c) aus einer SiOₓ-Verbindung besteht, wobei x die Werte 1 bis 2 annehmen kann.

6. Absorberbeschichtung (20) nach einem der vorstehenden Ansprüche,
**dadurch gekennzeichnet,**
**dass** die Absorptionsschicht (22) aus Cermet-Material besteht.

7. Absorberschichtung (20) nach einem der vorstehenden Ansprüche,
**dadurch gekennzeichnet,**
**dass** die im Infrarot-Bereich reflektierende Schicht (21) aus Gold, Silber, Platin oder Kupfer besteht.

8. Absorberbeschichtung (20) nach einem der vorstehenden Ansprüche,
**dadurch gekennzeichnet,**
**dass** die erste Barriereschicht (24a) Eisenoxid enthält.

9. Absorberbeschichtung (20) nach einem der vorstehenden Ansprüche,
**dadurch gekennzeichnet,**
**dass** die erste Barriereschicht (24a) Chromoxid enthält.

10. Absorberrohr (13), insbesondere für Parabol-Rinnen-Kollektoren, mit einem Rohr (1) aus Stahl, auf dessen Außenseite eine strahlungsselektive Absorberbeschichtung (20) nach Anspruch 1 aufgebracht ist, die erste Barriereschicht (24a) aus einem thermisch erzeugten Oxid besteht und der x Wert der auf der ersten Barriereschicht (24a) aufgebrachten und aus SiOx bestehenden zweite Barriereschicht (24b) die Werte 1 bis 2 annehmen kann.

11. Absorberrohr (13) nach Anspruch 10,
**dadurch gekennzeichnet,**
**dass** zwischen der reflektierenden Schicht (21) und der Absorptionsschicht (22) eine dritte Barriereschicht (24c) angeordnet ist.

12. Absorberrohr (13) nach Anspruch 11,
**dadurch gekennzeichnet,**
**dass** die dritte Barriereschicht (24c) aus einer AlₓO_{y}-Verbindung besteht, wobei x die Werte 1 bis 2 und y die Werte 1 bis 3 annehmen kann.

13. Absorberrohr (13) nach Anspruch 11,
**dadurch gekennzeichnet,**
**dass** die dritte Barriereschicht (24c) aus SiOₓ besteht, wobei x die Werte 1 bis 2 annehmen kann.

14. Verfahren zum Herstellen eines Absorberrohrs (13) mit den Schritten:
Aufbringen einer ersten Oxid-Barriereschicht (24a) auf ein Stahlrohr mittels thermischer Oxidation,
Aufbringen einer zweiten Barriereschicht (24b) mittels physikalischer Gasphasenabscheidung (PVD) von Silicium unter Zuführung von Sauerstoff,
Aufbringen einer im Infrarot-Bereich reflektierende Schicht (21) mit einer Schichtdicke von 50 bis 250 nm mittels physikalischer Gasphasenabscheidung von Gold, Silber, Platin oder Kupfer,
Aufbringen eine Absorptionsschicht (22) mittels gleichzeitiger physikalischer Gasphasenabscheidung von Aluminium und Molybdän, und
Aufbringen einer Antireflexionsschicht (23) mittels physikalischer Gasphasenabscheidung von Silicium unter Zuführung von Sauerstoff.

15. Verfahren nach Anspruch 14,
**dadurch gekennzeichnet,**
**dass** das Stahlrohr vor der thermischen Oxidation poliert wird und dabei eine Oberflächenrauheit von Rₐ < 0,2 µm erhält.

16. Verfahren nach Anspruch 14 oder 15,
**dadurch gekennzeichnet,**
**dass** die physikalische Gasphasenabscheidung bei einem Umgebungsdruck von weniger als 5 x 10⁻⁴ mbar durchgeführt wird.

17. Verfahren nach einem der Ansprüche 14 bis 16,
**dadurch gekennzeichnet,**
**dass** das Rohr während der physikalischen Gasphasenabscheidung drehend an Targets mit den jeweils aufzubringenden Substanzen vorbeigeführt wird.

18. Verfahren nach einem der Ansprüche 14 bis 17,
**dadurch gekennzeichnet,**
**dass** nach Aufbringen der im Infrarot-Bereich reflektierenden Schicht (21) eine dritte Barriereschicht (24c) mittels physikalischer Gasphasenabscheidung von Aluminium oder Silicium unter Zuführung von Sauerstoff aufgebracht wird.

19. Verfahren nach einem der Ansprüche 14 bis 18,
**dadurch gekennzeichnet,**
**dass** die Abscheidung des Aluminiumanteils in der Absorptionsschicht (22) unter Zuführung von Sauerstoff geschieht.

20. Verfahren nach einem der Ansprüche 14 bis 19,
**dadurch gekennzeichnet,**
**dass** die Abscheidung des Molybdänanteils relativ zur Abscheidung des Aluminium- und/oder Aluminiumoxidanteils in der Absorptionsschicht (22) variabel ausgeführt wird.

21. Verfahren zum Betreiben eines Parabol-Rinnen-Kollektors mit Absorberrohren (13), durch die ein Wärmeträgermedium (2) geleitet wird,
**dadurch gekennzeichnet,**
**dass** die Absorberrohre (13) mit einer strahlungsselektiven Absorberbeschichtung (20) verwendet werden, die mindestens eine im Infrarot-Bereich reflektierende Schicht (21), die Gold, Silber, Platin oder Kupfer aufweist und eine Schichtdicke von 50 nm bis 250 nm besitzt, mindestens eine über der reflektierenden Schicht (21) angeordnete Absorptionschicht (22) und eine über der Absorptionschicht (22) angeordnete Antireflexionsschicht (23) aufweist, wobei zwischen dem Absorberrohr (13) und der reflektierenden Schicht (21) wenigstens zwei Barriereschichten angeordnet sind, von denen eine dem Absorberrohr (13) zugewandte erste Barriereschicht (24a) aus einem thermisch erzeugten Oxid und eine auf der ersten Barriereschicht (24a) aufgebrachte zweite Barriereschicht (24b) aus SiOₓ besteht, wobei x die Werte 1 bis 2 annehmen kann.

22. Verfahren nach Anspruch 21,
**dadurch gekennzeichnet,**
**dass** die Betriebstemperatur der Absorberrohre (13) auf 400°C bis 550°C eingestellt wird.

## Claims

1. Radiation-selective absorber coating (20), especially for absorber tubes (13) of parabolic trough collectors (10), having a layer (21) which reflects in the infrared region, includes gold, silver, platinum or copper and has a layer thickness of 50 nm to 250 nm, having at least one absorption layer (22) disposed above the reflective layer (21), and having an antireflection layer (23) disposed above the absorption layer (22), wherein the reflective layer (21) is disposed upon at least two barrier layers (24a) and (24b), wherein the second barrier layer (24b) of the at least two barrier layers consists of SiOₓ.

2. Absorber coating (20) according to Claim 1,
**characterized in that**
the first barrier layer (24a) of the at least two barrier layers consists of a thermally generated oxide and the second barrier layer (24b) of the at least two barrier layers consists of SiOₓ, where x may assume the values of 1 to 2.

3. Absorber coating (20) according to Claim 1 or 2, **characterized in that**
a third barrier layer (24c) is disposed between the reflective layer (21) and the absorption layer (22).

4. Absorber coating (20) according to Claim 3,
**characterized in that**
the third barrier layer (24c) consists of an AlₓO_{y} compound where x may assume the values of 1 to 2 and y the values of 1 to 3.

5. Absorber coating (20) according to Claim 3,
**characterized in that**
the third barrier layer (24c) consists of an SiOₓ compound where x may assume the values of 1 to 2.

6. Absorber coating (20) according to any of the preceding claims,
**characterized in that**
the absorption layer (22) consists of cermet material.

7. Absorber coating (20) according to any of the preceding claims,
**characterized in that**
the layer (21) that reflects in the infrared region consists of gold, silver, platinum or copper.

8. Absorber coating (20) according to any of the preceding claims,
**characterized in that**
the first barrier layer (24a) contains iron oxide.

9. Absorber coating (20) according to any of the preceding claims,
**characterized in that**
the first barrier layer (24a) contains chromium oxide.

10. Absorber tube (13), especially for parabolic trough collectors, having a tube (1) made of steel with a radiation-selective absorber coating (20) according to Claim 1 applied to the outside thereof, wherein the first barrier layer (24a) consists of a thermally generated oxide and the x value of the second barrier layer (24b) which has been applied to the first barrier layer (24a) and consists of SiOₓ may assume the values of 1 to 2.

11. Absorber tube (13) according to Claim 10,
**characterized in that**
a third barrier layer (24c) is disposed between the reflective layer (21) and the absorption layer (22).

12. Absorber tube (13) according to Claim 11,
**characterized in that**
the third barrier layer (24c) consists of an AlₓO_{y} compound where x may assume the values of 1 to 2 and y the values of 1 to 3.

13. Absorber tube (13) according to Claim 11,
**characterized in that**
the third barrier layer (24c) consists of SiOₓ where x may assume the values of 1 to 2.

14. Process for producing an absorber tube (13) having the steps of:
applying a first oxide barrier layer (24a) to a steel tube by means of thermal oxidation,
applying a second barrier layer (24b) by means of physical gas phase deposition (PVD) of silicon while supplying oxygen,
applying a layer (21) which reflects in the infrared region and has a layer thickness of 50 to 250 nm by means of physical gas phase deposition of gold, silver, platinum or copper,
applying an absorption layer (22) by means of simultaneous physical gas phase deposition of aluminium and molybdenum, and
applying an antireflection layer (23) by means of physical gas phase deposition of silicon while supplying oxygen.

15. Process according to Claim 14,
**characterized in that**
the steel tube is polished prior to the thermal oxidation and this gives it a surface roughness of Rₐ < 0.2 µm.

16. Process according to Claim 14 or 15,
**characterized in that**
the physical gas phase deposition is conducted at an ambient pressure of less than 5 × 10⁻⁴ mbar.

17. Process according to any of Claims 14 to 16,
**characterized in that**
the tube, during the physical gas phase deposition, is rotated while being moved past targets comprising the respective substances to be applied.

18. Process according to any of Claims 14 to 17,
**characterized in that**
after application of the layer (21) that reflects in the infrared region a third barrier layer (24c) is applied by means of physical gas phase deposition of aluminium or silicon while supplying oxygen.

19. Process according to any of Claims 14 to 18,
**characterized in that**
the deposition of the aluminium component in the absorption layer (22) is effected while supplying oxygen.

20. Process according to any of Claims 14 to 19,
**characterized in that**
the deposition of the molybdenum component is executed in a variable manner relative to the deposition of the aluminium and/or aluminium oxide component in the absorption layer (22).

21. Method of operating a parabolic trough collector having absorber tubes (13) through which a heat transfer medium (2) is conducted,
**characterized in that**
the absorber tubes (13) are used with a radiation-selective absorber coating (20) which has at least one layer (21) which reflects in the infrared region, includes gold, silver, platinum or copper and has a layer thickness of 50 nm to 250 nm, at least one absorption layer (22) disposed above the reflective layer (21), and an antireflection layer (23) disposed above the absorption layer (22), wherein, of at least two barrier layers that are disposed between the absorber tube (13) and the reflective layer (21), a first barrier layer (24a) facing the absorber tube (13) consists of a thermally generated oxide and a second barrier layer (24b) applied to the first barrier layer (24a) consists of SiOₓ, where x may assume the values of 1 to 2.

22. Method according to Claim 21,
**characterized in that**
the operating temperature of the absorber tubes (13) is set to 400°C to 550°C.

## Revendications

1. Revêtement absorbeur (20) sélectif de rayonnement, en particulier pour des tubes absorbeurs (13) de collecteurs cylindro-paraboliques (10), présentant une couche (21) réfléchissant dans la plage des infrarouges, qui présente de l'or, de l'argent, du platine ou du cuivre et une épaisseur de couche de 50 nm à 250 nm, au moins une couche d'absorption (22) disposée au-dessus de la couche réfléchissante (21) et une couche antireflet (23) disposée au-dessus de la couche d'absorption (22), la couche réfléchissante (21) étant disposée sur au moins deux couches barrière (24a) et (24b), la deuxième couche barrière (24b) desdites au moins deux couches barrière étant constituée par un composé de type SiOₓ.

2. Revêtement absorbeur (20) selon la revendication 1, **caractérisé en ce que** la première couche barrière (24a) desdites au moins deux couches barrière est constituée par un oxyde généré thermiquement et la deuxième couche barrière (24b) desdites au moins deux couches barrière est constituée par un composé de type SiOₓ, x pouvant valoir 1 à 2.

3. Revêtement absorbeur (20) selon la revendication 1 ou 2, **caractérisé en ce qu'**une troisième couche barrière (24c) est disposée entre la couche réfléchissante (21) et la couche d'absorption (22).

4. Revêtement absorbeur (20) selon la revendication 3, **caractérisé en ce que** la troisième couche barrière (24c) est constituée par un composé de type AlₓO_{y}, x pouvant valoir 1 à 2 et y pouvant valoir 1 à 3.

5. Revêtement absorbeur (20) selon la revendication 3, **caractérisé en ce que** la troisième couche barrière (24c) est constituée par un composé de type SiOₓ, x pouvant valoir 1 à 2.

6. Revêtement absorbeur (20) selon l'une quelconque des revendications précédentes, **caractérisé en ce que** la couche d'absorption (22) est constituée par un matériau de type cermet.

7. Revêtement absorbeur (20) selon l'une quelconque des revendications précédentes, **caractérisé en ce que** la couche (21) réfléchissant dans la plage des infrarouges est constituée par de l'or, de l'argent, du platine ou du cuivre.

8. Revêtement absorbeur (20) selon l'une quelconque des revendications précédentes, **caractérisé en ce que** la première couche barrière (24a) contient de l'oxyde de fer.

9. Revêtement absorbeur (20) selon l'une quelconque des revendications précédentes, **caractérisé en ce que** la première couche barrière (24a) contient de l'oxyde de chrome.

10. Tube absorbeur (13), en particulier pour des collecteurs cylindro-paraboliques, présentant un tube (1) en acier sur la face externe duquel est appliqué un revêtement absorbeur (20) sélectif de rayonnement selon la revendication 1, la première couche barrière (24a) est constituée par un oxyde généré thermiquement et la valeur x de la deuxième couche barrière (24b) appliquée sur la première couche barrière (24a) et constituée par du SiOₓ pouvant valoir 1 à 2.

11. Tube absorbeur (13) selon la revendication 10, **caractérisé en ce qu'**une troisième couche barrière (24c) est disposée entre la couche réfléchissante (21) et la couche d'absorption (22).

12. Tube absorbeur (13) selon la revendication 11, **caractérisé en ce que** la troisième couche barrière (24c) est constituée par un composé de type AlₓO_{y}, x pouvant valoir 1 à 2 et y pouvant valoir 1 à 3.

13. Tube absorbeur (13) selon la revendication 11, **caractérisé en ce que** la troisième couche barrière (24c) est constituée par un composé de type SiOₓ, x pouvant valoir 1 à 2.

14. Procédé pour la préparation d'un tube absorbeur (13) présentant les étapes consistant à :
appliquer une première couche barrière (24a) d'oxyde sur un tube en acier par oxydation thermique,
appliquer une deuxième couche barrière (24b) par dépôt physique en phase vapeur (PVD) de silicium sous alimentation d'oxygène,
appliquer une couche (21) réfléchissant dans la plage des infrarouges présentant une épaisseur de couche de 50 à 250 nm par dépôt physique en phase vapeur d'or, d'argent, de platine ou de cuivre,
appliquer une couche d'absorption (22) par dépôt physique en phase vapeur simultané d'aluminium et de molybdène et appliquer une couche antireflet (23) par dépôt physique en phase vapeur de silicium sous alimentation d'oxygène,

15. Procédé selon la revendication 14, **caractérisé en ce que** le tube en acier est poli avant l'oxydation thermique et obtient ainsi une rugosité de surface Rₐ < 0,2 µm.

16. Procédé selon la revendication 14 ou 15, **caractérisé en ce que** le dépôt physique en phase gazeuse est réalisé à une pression ambiante inférieure à 5 x 10⁻⁴ mbar.

17. Procédé selon l'une quelconque des revendications 14 à 16, **caractérisé en ce que** pendant le dépôt physique en phase vapeur, le tube est avancé en tournant le long des cibles présentant les substances à chaque fois à appliquer.

18. Procédé selon l'une quelconque des revendications 14 à 17, **caractérisé en ce qu'**après l'application de la couche (21) réfléchissant dans la plage des infrarouges, une troisième couche barrière (24c) est appliquée par dépôt physique en phase gazeuse d'aluminium ou de silicium sous alimentation d'oxygène.

19. Procédé selon l'une quelconque des revendications 14 à 18, **caractérisé en ce que** le dépôt de la proportion d'aluminium dans la couche d'absorption (22) a lieu sous alimentation d'oxygène.

20. Procédé selon l'une quelconque des revendications 14 à 19, **caractérisé en ce que** le dépôt de la proportion de molybdène est réalisé de manière variable par rapport au dépôt de la proportion d'aluminium et/ou d'oxyde d'aluminium dans la couche d'absorption (22).

21. Procédé pour le fonctionnement d'un collecteur cylindro-parabolique présentant des tubes absorbeurs (13) à travers lesquels un milieu caloporteur (2) est guidé, **caractérisé en ce que** les tubes absorbeurs (13) sont utilisés avec un revêtement absorbeur (20) sélectif de rayonnement, qui présente au moins une couche (21) réfléchissant dans la plage des infrarouges, qui présente de l'or, de l'argent, du platine ou du cuivre et une épaisseur de couche de 50 nm à 250 nm, au moins une couche d'absorption (22) disposée au-dessus de la couche réfléchissante (21) et une couche antireflet (23) disposée au-dessus la couche d'absorption (22), au moins deux couches barrière étant disposées entre le tube absorbeur (13) et la couche réfléchissante (21), dont une première couche barrière(24a), orientée vers le tube absorbeur (13), est constituée par un oxyde généré thermiquement et une deuxième couche barrière (24b) appliquée sur la première couche barrière(24a) est constituée par un composé de type SiOₓ, x pouvant valoir 1 à 2.

22. Procédé selon la revendication 21, **caractérisé en ce que** la température de fonctionnement des tubes absorbeurs (13) est réglée à 400°C jusqu'à 550°C.
